Europäisches Patentamt

European Patent Office

Office européen des brevets

(11) Veröffentlichungsnummer: **0 233 579 B1**

## (12) EUROPÄISCHE PATENTSCHRIFT

(45) Veröffentlichungstag der Patentschrift: **13.03.91**

(51) Int. Cl.5: **G01N 27/66**

(21) Anmeldenummer: **87101846.1**

(22) Anmeldetag: **10.02.87**

(54) **Verfahren und Vorrichtung zum Feststellen geringfügiger Mengen von Gasen oder Dämpfen in Gasgemischen.**

(30) Priorität: **15.02.86 DE 3604893**

(43) Veröffentlichungstag der Anmeldung:
**26.08.87 Patentblatt 87/35**

(45) Bekanntmachung des Hinweises auf die
Patenterteilung:
**13.03.91 Patentblatt 91/11**

(84) Benannte Vertragsstaaten:
**AT BE CH DE ES FR GB IT LI NL SE**

(56) Entgegenhaltungen:
**EP-A- 0 160 888**
**EP-A- 0 188 397**
**DE-A- 2 236 303**
**US-A- 3 897 344**
**US-A- 4 119 851**

**SCIENTIFIC HONEYWELLER, Band 6, Heft 3,
Oktober 1985, Seiten 9-17, B.N. CASTLEMAN:
"Ion-Mobility Spectroscopy"**

(73) Patentinhaber: **Honeywell-Elac-Nautik GmbH
Westring 425-429
W-2300 Kiel 1(DE)**

(72) Erfinder: **Biehl, Karl-Ernst Dipl.-Phys. Dr.
Salisweg 58
W-6450 Hanau 1(DE)**
Erfinder: **Tyssen, Egon Dipl.-Phys. Dr.
Akazienweg 6a
W-8755 Alzenau(DE)**
Erfinder: **Roedern, von, Conrad Graf, Ing.
grad.
Stadtparkweg 8a
W-2300 Kiel 1(DE)**

(74) Vertreter: **Rentzsch, Heinz et al
Honeywell Europe S.A. Holding KG Kaiserleistrasse 55 Postfach 184
W-6050 Offenbach am Main(DE)**

**Beschreibung**

Die Erfindung befaßt sich mit dem Erkennen geringfügiger Mengen von Gasen oder Dämpfen in Luft oder anderen Gasgemischen unter Verwendung einer Ionisationsmeßzelle, wie sie im Prinzip aus US-A 41 19 851 bekannt ist. Die dort beschriebenen Meßzellen weisen in Richtung des Gasstroms hintereinander angeordnet eine Laufzeit- oder Driftzone und eine Rekombinationszone auf, wobei die stromaufwärts oder stromabwärts von der Rekombinationszone angeordnete Driftzone den im Oberbegriff des Anspruchs 1 beschriebenen Aufbau hat und eine stromabwärts von der Driftzone angeordnete Gasstromerzeugungs-vorrichtung in Form einer Pumpe für einen kontinuierlichen Gasstrom durch die Meßzelle sorgt.

Die physikalischen und chemischen Grundlagen der Messung mit solchen Ionisationsmeßzellen sind ferner in einem Aufsatz "Ion-Mobility Spectroscopy", abgedruckt in der Firmendruckschrift Scientific Honeyweller, Band 6, Heft 3, Oktober 1985, Seiten 9 bis 17 ausführlich beschrieben. Bei dem bekannten Verfahren der Ionenmobilitätsspektroskopie bewegen sich die Ionen unter dem Einfluß eines elektrostatischen Feldes durch die Driftzone, wobei zur Erzeugung dieses Feldes eine Spannung in der Größenordnung von 2 kV zwischen Strahlungsquelle und Kollektorelektrode liegt. Da Leichtionen schneller wandern als Schwerionen treffen die zu einem bestimmten Zeitpunkt auf den Weg geschickten Ionen je nach ihrem Molekülgewicht zu unterschiedlichen Zeiten an der Kollektorelektrode ein, so daß jeweils ein kurzer Stromstoß entsteht. Die zeitliche Lage des Stromstoßes innerhalb eines solchen Laufzeitspektrums ist von der Masse der betreffenden Ionen abhängig und gestattet somit ein masseabhängiges Sortieren der Ionen. Die Intensität des jeweiligen Entladestromstoßes ist ein Maß für den Anteil von Ionen einer bestimmten Masse in dem zu einem vorgegebenen Zeitpunkt auf den Weg gebrachten Ionenpaket. Zum Erkennen bestimmter Ionen ist also eine Laufzeitanalyse des Ionenstroms erforderlich. Außerdem muß die Driftzone eine ausreichende Länge haben, damit der zeitliche Abstand zwischen dem Eintreffen von Ionen unterschiedlicher Masse an der Kollektorelektrode ein Trennen der einzelnen Stromimpulse voneinander und damit das Erkennen der einzelnen Ionengruppen gestattet.

Aufgabe der Erfindung ist es, den gerätetechnischen Aufwand zum Feststellen geringfügiger Mengen von Gasen oder Dämpfen in Gasgemischen zu verringern und einen möglichst einfachen und kompakten, für diese Zwecke geeigneten Gasdetektor zu schaffen, der auch für den mobilen Einsatz geeignet ist, schnell betriebsbereit gemacht werden kann und robust und zuverlässig aufgebaut ist.

Der Lösung dieser Aufgabe dient das im Anspruch 1 gekennzeichnete und in den nachgeordneten Unteransprüchen weitergebildete Verfahren. Es wird keine Hochspannung zwischen Kollektorelektrode und Ionenquelle benötigt. Außerdem entfällt die aufwendige und eine relativ lange Driftzone erfordernde Laufzeitanalyse der ankommenden Ionenpakete. An ihre Stelle tritt eine von der Gitterfrequenz abhängige Messung des Kollektorstroms. Der Detektor kann somit kürzer und kompakter aufgebaut werden. Das Verfahren gemäß der Erfindung beruht auf der Erkenntnis, daß die Frequenz der an die Gitterdrähte angelegten Wechselspannung dafür maßgebend ist, welcher Anteil von Ionen einer bestimmten Masse durch das Gitter hindurchgelassen wird und somit zur Kollektorelektrode gelangt. Wird die Frequenz über einen bestimmten Frequenzbereich gewobbelt bzw. geändert und zwar schrittweise oder kontinuierlich, so werden in Abhängigkeit von der jeweiligen Frequenz unterschiedliche Ionen hindurchgelassen. Je nachdem, ob Ionen des einen oder des anderen Gases in dem Gasgemisch vorhanden sind, wird zugeordnet zur jeweiligen Frequenz ein der bestimmten Gassorte zugeordneter Kollektorstrom auftreten oder nicht. Vergleicht man nunmehr die beim Durchstimmen der Frequenz erhaltene Kollektorstromkurve mit einer gespeicherten Kollektorstromkurve, so kann man feststellen, welche Gassorten in dem untersuchten Gasgemisch enthalten sind. Dieser Vergleich wird mit Hilfe eines Mikroprozessors automatisch und digital durchgeführt, so daß eine hohe Zuverlässigkeit des Untersuchungsverfahrens erreicht ist.

Die durch das neue Meßverfahren erzielten Vorteile werden unterstützt durch bevorzugte Ausgestaltungen der Ionisationsmeßzelle und der angeschlossenen Auswerteschaltung, wie sie in den auf Vorrichtungen zur Durchführung des Verfahrens gerichteten Ansprüchen gekennzeichnet sind.

Die Erfindung wird nachfolgend anhand eines in den Zeichnungen wiedergegebenen Ausführungsbeispiels erläutert. Dabei zeigt

Fig. 1 zur Verdeutlichung der Wirkungsweise des neuen Verfahrens die Wirkungsweise des normierten Kollektorstroms

$$i = \frac{I}{I_0}$$

in Abhängigkeit von der Gitterfrequenz f für zwei Arten von Ionen unterschiedlicher Beweglichkeit;

Fig. 2 den von der Gitterfrequenz f abhängigen Kollektorstrom I für gefilterte Luft und zwei Luft/Gasgemische unterschiedlicher Konzentration sowie die hieraus ermittelten konzentrationsabhängigen Differenzkurven;

Fig. 3 schematisch den Aufbau der Meßzelle; und

Fig. 4 das Blockschaltbild einer an die Meßzelle angeschlossenen Auswerteschaltung.

Die Meßzelle besteht aus einem im wesentlichen rohrförmigen Metallgehäuse 1, in dessen Auslaßseite ein Flansch 2 abgedichtet eingesetzt ist. Der Flansch 2 trägt einen Ventilator 3, mit dessen Hilfe auf der Einlaßseite 4 der mit den festzustellenden Spurengasen versetzte Luftstrom über Einlaßöffnungen 5 angesaugt wird. Der Gasstrom durchsetzt zunächst ein mechanisches Filter 6 und gelangt dann zu einem siebartigen Strömungsteiler 7, welcher die Eingangsströmung vergleichmäßigt und einen im wesentlichen laminaren Gasstrom entstehen läßt. Der Strömungsteiler 7 besteht aus zwei hintereinandergeschalteten Sieben 7a und 7b, welche elektrisch miteinander verbunden sind. Beide Siebe zusammen haben galvanische Verbindung mit dem Metallgehäuse 1 und sind an einen elektrischen Anschluß 8 geführt, der als Quellen- oder Emitteranschluß dient. Der sich in Strömungsrichtung anschließende Bereich 9 des Gehäuses 1 ist von einer ringförmigen Folie 10 umgeben, welche mit Americium 241 als Strahlenquelle zur Ionisierung des Gasstroms beschichtet ist. Die Folie 10 wird von einer Metallbuchse 11 getragen, welche elektrisch leitend mit dem Anschluß 8, dem Strömungsteiler 7 sowie dem Gehäuse 1 verbunden ist. Hierdurch wird eine Fokussierung der Ionen erwünschter Polarität im Gasstrom und eine Abschirmung gegen äußere Einflüsse erreicht. Von der Hülse 11 durch ein aus Kunststoff bestehendes Zwischenstück 12 elektrisch isoliert ist im Strömungsweg anschließend ein Gitter 13 vorgesehen. Es wird von einer Keramikbuchse 14 gehalten und besteht aus parallelen Drähten, welche jeweils abwechselnd elektrisch miteinander verbunden sind. Dadurch entstehen zwei Gruppen von Drähten, so daß benachbarte Gitterdrähte jeweils mit unterschiedlichem elektrischen Potential versorgt werden können, zwischen den beiden Gruppen, also ein elektrisches Wechselfeld ausgebildet werden kann.

Durch die Buchse 14 oder ein Abstandsstück aus Kunststoff, beispielsweise aus Polytetrafluoräthylen PTFE vom Gitter 13 elektrisch getrennt ist nachfolgend im Strömungsweg die ebenfalls siebartig ausgebildete Kollektorelektrode 16 angeordnet. Sie befindet sich am Ausgang der Driftzone und steht mit einem Kollektoranschluß 17 in Verbindung, während die beiden Gruppen von Gitterdrähten an Gitteranschlüsse 18 und 19 geführt sind. Die Kollektorelektrode 16 wird von einer PTFE-Buchse 15 getragen, an deren gegenüberliegender Stirnseite ein weiterer siebartiger Strömungsteiler 21 angebracht ist, um die Gasströmung auch auf der Austrittsseite, also vor dem Ventilator 3 möglichst laminar zu halten. Der Ventilator 3 erzeugt mit Hilfe einer Drehzahlregelschaltung einen gleichförmigen Gasstrom durch das Gehäuse 1. Die Buchsen 14 und 15, der Isolierring 12 sowie die Metallhülse 11 sind zumindest teilweise von einer Kunststoffhülse 23 umgeben, welche zugleich das Abstandsstück 12 bildet und die genannten Teile gegenüber dem äußeren metallischen Gehäuserohr 1 elektrisch isoliert. Die Kollektorelektrode 16 wird von der nachfolgenden Verstärkerstufe auf Bezugsspannungspotential gehalten. Der ausgangsseitige Strömungsteiler 21 ist zur elektrischen Abschirmung der Kollektorelektrode 16 mit dem Metallgehäuse 1 verbunden.

Zur Erläuterung der Wirkungsweise sei zunächst angenommen, daß der auf der Saugseite 4 in die Meßzelle eintretende Gasstrom ein Luftstrom ist, der mit einem einzigen Spurengas versetzt ist. Dieses Gasgemisch tritt nach Beruhigung seiner Strömung im Strömungsteiler 7 in den von der Strahlerfolie 10 umgebenen Raum 9 ein, in welchem die Luft- und die Spurengasmoleküle teils direkt teils indirekt ionisiert werden. Dieser Vorgang ist in dem eingangs genannten Aufsatz ausführlich beschrieben. Die Luftmoleküle haben eine wesentlich geringere Masse als die Spurengasmoleküle. Der Gasstrom gelangt dann zum Gitter 13, dessen Drähte jeweils abwechselnd auf unterschiedlichem Potential liegen. Den beiden Gitterdrahtgruppen werden über die Leitungen 18,19 gleichfrequente aber um 180° phasenversetzte Rechteckspannungen zugeführt. Der Potentialmittelwert des Gitters 13 entspricht dem am Ort des Gitters herrschenden Potential des zwischen Kollektorelektrode 16 und Strahlenquelle 9,11 bestehenden elektrischen Gleichfeldes. Zwischen den einzelnen Gitterdrähten ist also ein elektrisches Wechselfeld wirksam, dessen Richtung quer zur Strömungsrichtung des Gasstroms verläuft. Dieses elektrische Querfeld versucht die Ionen aus ihrer Strömungsrichtung abzulenken. Dies wird umso eher gelingen, je kleiner einerseits die Masse der Ionen ist und andererseits je niedriger die Frequenz des Wechselfeldes ist. Schwere Ionen werden auf Grund ihrer Masse von dem elektrischen Wechselfeld wesentlich weniger leicht aus ihrer Bahn gebracht als leichte Ionen. Liegt ein statisches elektrisches Feld an den Gitterpaaren, so wird ein Teil der abgelenkten Ionen auf die Gitterdrähte auftreffen und ihre Ladung über die Gitterdrähte abgeleitet werden. Liegt andererseits ein Wechselfeld sehr hoher Frequenz an, so können weder leichte Ionen noch erst recht schwerere Ionen den Kräften dieses sich schnell ändernden Wechselfeldes folgen und werden folglich unabgelenkt durch das Gitter hindurchtreten. Je leichter die ionisierten Moleküle sind und je niedriger die Frequenz ist, umso mehr ionisierte Moleküle werden ihre Ladung an das Gitter 13 abgeben und dann elektrisch neutral mit dem Gasstrom sich in Richtung Kollektorelektrode 16 bewegen. Die Anzahl der ionisiert am Kollektor 16 ankommenden Moleküle hängt also einerseits von der Masse dieser Moleküle und andererseits von der Frequenz der an das Gitterpaar 13 angelegten Wechselspannung ab. Damit sind die beiden wichtigen Kriterien zum Feststellen und Aussortieren bestimmter Ionen gegeben. Die Meßzelle nutzt die unterschiedliche Ionenbeweglichkeit von Luft- und Gasionen als Kriterium für deren Unterscheidung aus.

Neben dem Sog des den Gasstrom bewegenden Ventilators 3 wirkt im Prinzip auch das zwischen Ionenquelle 9, 10 und Kollektor 16 anstehende elektrische Gleichfeld auf die Bewegungsgeschwindigkeit der Ionen ein. Die Stärke dieses Feldes ist jedoch angesichts der geringen Spannung von z.B. 5V zwischen Quelle und Kollektor gering, so daß dieser beschleunigende Einfluß auf die axiale Bewegungsgeschwindigkeit der Ionen vernachlässigbar ist. Es bewirkt jedoch durch die fokussierende Querkomponente zwischen Metallgehäuse 1 und Gitter 13 bzw. Metallgehäuse 1 und Kollektor 16 die nötige Diffusionsrate für Ionen mit unerwünschter Polarität. Da abweichend von der eingangs beschriebenen Meßzelle keine axiale Laufzeitselektierung der Ionen erfolgt, haben solche durch das schwache elektrische Gleichfeld bedingten Laufzeitänderungen bzw. -schwankungen keinen Einfluß auf das Meßergebnis. Demgegenüber ist der Wegfall einer Hochspannungserzeugung für die Meßzelle gerade für tragbare Geräte und deren Bedienungssicherheit von bedeutendem Vorteil.

Wie zuvor erwähnt, werden bei sehr hochfrequenten Gitterwechselspannungen praktisch alle Ionen das Gitter 13 ohne Ablenkung durchlaufen und zum Kollektor 16 gelangen. Der bei einer solch hohen Gitterfrequenz gemessene Kollektorstrom ist also ein Maß für die Gesamtheit aller im Gasstrom enthaltener Ionen und damit zugleich für den Gasstrom und dessen Strömungsgeschwindigkeit selbst. Dieser bei sehr hoher Gitterfrequenz gemessene Kollektorstrom $I_o$ kann somit als Istwert einem Drehzahlregler für den Ventilator 3 zugeführt werden, um über eine Drehzahlregelung des Ventilators eine konstante Strömungsgeschwindigkeit des Gasstroms aufrechtzuerhalten.

Eine weitere Methode zur Bestimmung der Strömungsgeschwindigkeit des Gasstroms besteht in der Messung der Ionenlaufzeit zwischen Gitter 13 und Kollektorelektrode 16, deren Abstand bekannt ist. Aus Abstand und Laufzeit läßt sich die Geschwindigkeit ermitteln. Dabei wird vorausgesetzt, daß sich angesichts des nur schwachen elektrischen Längsfeldes zwischen Kollektor und Gitter die Strömungsgeschwindigkeit des Gasstroms nur unwesentlich von der Wanderungsgeschwindigkeit der Ionen unterscheidet. Man nimmt eine sprunghafte Frequenzänderung am Gitter 13 vor und mißt die Zeitspanne bis diese Frequenzänderung zu einer entsprechenden sprunghaften Änderung des Kollektorstroms führt. Da bei einer kontinuierlichen Gasanalyse eine zyklische Änderung der Gitterspannungsfrequenz erfolgt, kann in jedem Zyklus durch eine solche sprunghafte Änderung auch die Ionenlaufzeit und damit die Strömungsgeschwindigkeit gemessen werden. Dieser Istwert wird dann dem Drehzahlregler für den Ventilator 3 zugeleitet.

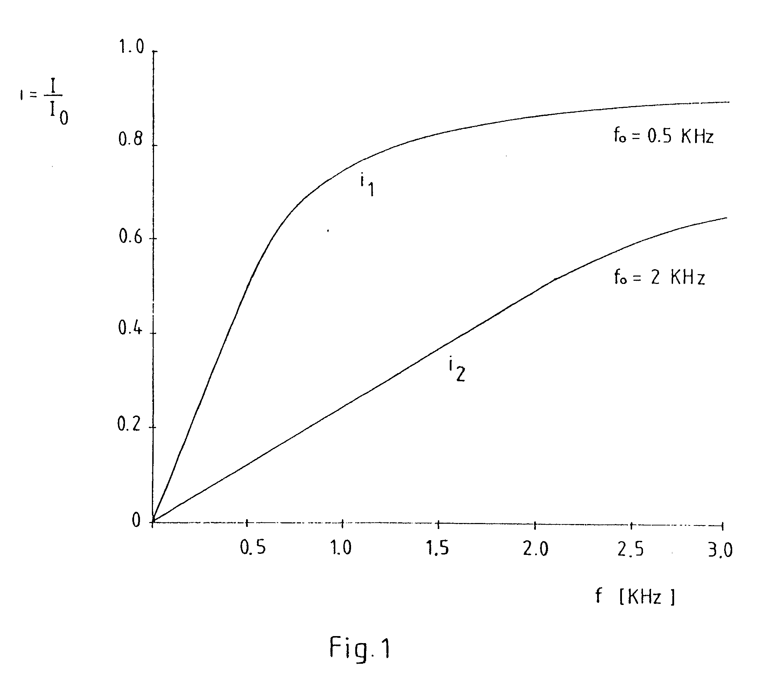

Fig. 1 zeigt die Abhängigkeit des normierten Kollektorstroms i von der Frequenz f bei Gasen unterschiedlicher Ionenbeweglichkeit. Als normierter Kollektorstrom i ist das Verhältnis des in Abhängigkeit von der Frequenz tatsächlich gemessenen Kollektorstroms zum maximalen Kollektorstrom aufgetragen, der, wie oben erwähnt, bei einer sehr hohen bzw. unendlich hohen Gitterwechselfrequenz auftritt. Die Kurve $i_2$ stammt von einem Gas, dessen Ionen etwa die vierfache Ionenbeweglichkeit haben als das die Kurve $i_1$ erzeugende Gas. Dabei läßt sich die Ionenbeweglichkeit als Frequenz darstellen, nämlich als diejenige Frequenz $f_o$, bei der der Ionenstrom die Hälfte des maximal erreichbaren Werts annimmt. Bei konstantem Gasdurchsatz durch die Meßzelle ist $f_o$ abhängig von der Ionengeschwindigkeit und dem Gitterabstand. Da letzterer konstant bleibt, ist $f_o$ der Ionenbeweglichkeit direkt proportional. Im vorliegenden Fall wurde mit einem Gitter gearbeitet, dessen parallele Drähte einen Durchmesser von 0,08 mm und einen Abstand von 0,4 mm hatten. Wie man sieht, steigt der Kollektorstrom $i_2$ der schnelleren oder beweglicheren Ionen ($f_o$ = 2 kHz) mit zunehmender Gitterfrequenz f langsamer an, als der Kollektorstrom $i_1$ der weniger beweglichen Ionen ($f_o$ = 0,5 kHz). Am Gitter 13 können nämlich die beweglicheren Ionen dem elektrischen Wechselfeld bis zu höheren Frequenzen folgen und rekombinieren. Der große Teil der weniger beweglichen Ionen hingegen erreicht bei dieser Frequenz während einer Halbperiode der Gitterwechselspannung nicht den benachbarten Gitterdraht, gelangt also zum Kollektor 16 und wird dort unter Erzeugung eines Stromes neutralisiert. Die beiden Kurven $i_1$ und $i_2$ zeigen also einen typischen Verlauf des normierten Kollektorstroms i in Abhängigkeit von Frequenz und Ionenbeweglichkeit. Auf Grund dieser Eigenschaften ist die beschriebene Meßzelle geeignet, verschiedene Gase anhand des frequenzabhängigen Verlaufs des Kollektorstroms voneinander zu unterscheiden. Legt man nämlich in einem Speicher eine Schar solcher normierter, frequenzabhängiger Kollektorstromkurven $i_1$, $i_2$ usw. ab, welche für unterschiedliche Gassorten kennzeichnend sind und untersucht man dann ein unbekanntes Gasgemisch, indem man die Frequenz der den Gitterdrahtgruppen zugeführten Wechselspannung periodisch entweder kontinuierlich oder in kleinen Schritten verändert (wobbelt) und dabei den Kollektorstrom bzw. den normierten Kollektorstrom in Abhängigkeit von der Gitterspannungsfrequenz mißt, digitalisiert und als Funktion der jeweiligen Frequenz in einen zweiten Speicher eingibt, so kann man durch Vergleich der gespeicherten Meßkurve mit den ebenfalls gespeicherten für bestimmte Gase charakteristischen Kurven herausfinden, welches Spurengas in dem untersuchten Gasstrom enthalten ist. Ein solcher Vergleich digital abgespeicherter Daten erfolgt zweckmäßig mit Hilfe eines Mikroprozessors, der bei Übereinstimmung der gemessenen Strom/Frequenzkurven mit einer in Form einer Tabelle abgespeicherten, für ein bestimmtes Gas charakteristischen Strom/Frequenzkurve ein für das entsprechende Gas bzw. für einen bestimmten Dampf kennzeichnendes Anzeigesignal liefert.

In vielen Fällen wird es nicht erforderlich sein, den gesamten Frequenzbereich durchzustimmen, sondern man kann mit ausgewählten Stützfrequenzen arbeiten. Zunächst wird der Sättigungswert $I_0$ des Kollektorstroms für eine sehr hohe Frequenz, z.B. 15 kHz bestimmt. Aus diesem Sättigungswert lassen sich rechnerisch, ggf. durch einige bei bestimmten ausgewählten Frequenzen durchgeführte Messungen gestützte Werte für eine hinreichende Anzahl von frequenzabhängigen Stromwerten bei bestimmten Frequenzen für die Strom/Frequenzkurve von Luft bestimmen und als Referenzwerte abspeichern. Bei der Untersuchung eines unbekannten Gases werden die genannten Stützfrequenzen nacheinander erzeugt und der Kollektorstrom gemessen und über einen A/D-Umsetzer digitalisiert. Entweder speichert man die den einzelnen Frequenzen zugeordneten Werte oder man vergleicht sie im Online-Betrieb unmittelbar mit den abgespeicherten Werten der Kurve für Luft. Auf diese Weise kann man für bestimmte Gasarten typische Kurvenverläufe erkennen und im Falle der Überschreitung vorgegebener Konzentrationsgrenzwerte ein Alarmsignal auslösen.

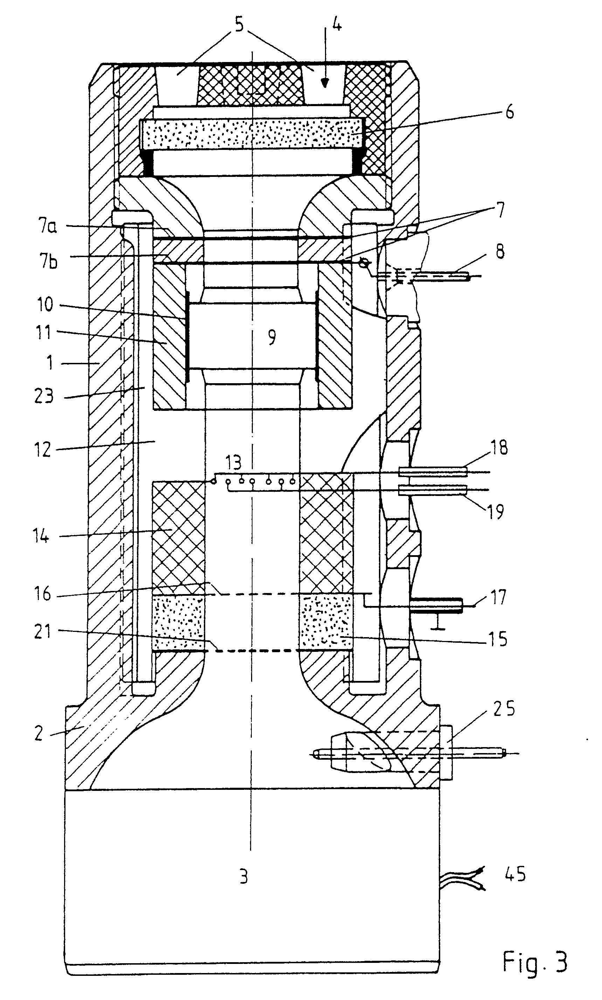

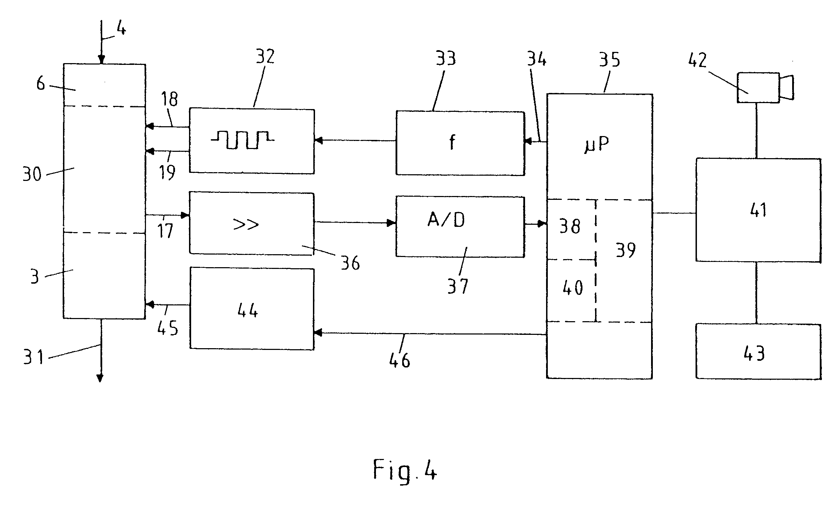

Im Blockschaltbild gemäß Fig. 4 ist die Meßzelle 30 mit Gaseinlaß 4, Filter 6, Ventilator 3 und Luftauslaß 31 nur als Block dargestellt, weil nachfolgend nur die Ansteuerung der Meßzelle 30 und die Verarbeitung der gewonnenen Signale betrachtet werden sollen. Ein Rechteckgenerator 32 erzeugt auf den Leitungen 18 und 19 (vergl. Fig. 3) die gegenphasigen Wechselspannungssignale für die beiden Gruppen von Gitterdrähten des Gitters 13. Die Frequenz dieser Rechtecksignale läßt sich mit Hilfe einer Frequenzsteuerschaltung 33 entweder kontinuierlich oder schrittweise verändern und zwar entsprechend einem Ausgangssignal auf der Frequenzsteuerleitung 34 des Mikroprozessors 35. Der Kollektorstrom auf der Leitung 17 gelangt zu einem Verstärker 36 und von dort zu einem A/D-Umsetzer 37. Das digitalisierte Kollektorstromsignal wird in einen Speicher 38 des Mikrocomputers 35 eingegeben und in einem digitalen Vergleicher 39 mit den in einem weiteren Speicher 40 in Form einer Tabelle abgespeicherten, für bestimmte Gassorten charakteristischen Strom/Frequenzkurven verglichen. Wird hierbei eine bestimmte, beispielsweise gefährliche Gasart oder Gaskonzentration erkannt, so wird über eine Alarmschaltung 41 eine akustische oder optische Alarmvorrichtung 42 ausgelöst und/oder die erkannte Gasart und ggf. auch die ermittelte Konzentration auf einer Anzeigevorrichtung 43 optisch angezeigt. Zusätzlich kann ein Registriergerät entweder an die Alarmschaltung 41 oder unmittelbar an den Mikrocomputer 35 angeschlossen sein.

Bei hohen Strömungsgeschwindigkeiten der Meßzelle 30 gelangen pro Zeiteinheit mehr Ionen zum Kollektor 16 als bei niedriger Strömungsgeschwindigkeit. Um einen solchen Einfluß der Strömungsgeschwindigkeit auf das Kollektorstromsignal auszuschalten, kann man entweder eine von der Strömungsgeschwindigkeit abhängige Korrektur des Kollektorstromsignals vornehmen oder man hält die Strömungsgeschwindigkeit konstant. Zur Messung der Strömungsgeschwindigkeit kann ein herkömmlicher Strömungsfühler dienen. Die Beeinflussung der Strömungsgeschwindigkeit erfolgt über die Drehzahl des Ventilators 3. Anstelle eines besonderen Strömungsfühlers kann, wie bereits erwähnt, auch der Kollektorstrom selbst herangezogen werden, nämlich der bei einer sehr hohen Gitterwechselspannungsfrequenz sich einstellende Kollektorstrom $I_0$. Bei einer sehr hohen Gitterfrequenz von beispielsweise 15 kHz treffen keine Ionen auf das Gitter, sondern sie strömen alle zum Kollektor und bilden damit den Kollektorsättigungsstrom $I_0$ Dieser ist zugleich ein Maß für die Strömungsgeschwindigkeit und kann folglich über eine Drehzahlregelschaltung 44 zur Steuerung der Drehzahl des Ventilators 3 dienen. In einfachster Weise wird hierzu die dem Ventilator 3 über die Leitung 45 zugeführte Spannung geändert bzw. im Falle eines Impuls- oder Drehstrommotors die Frequenz der Erregerspannung. Dasdem jeweiligen Istwert der Strömungsgeschwindigkeit bzw. des Kollektorsättigungsstroms entsprechende Signal erhält die Regelschaltung 44 über die Leitung 46 vom Mikrocomputer 35. Es wird dort aus dem bei sehr hoher Frequenz anfallenden Ausgangssignal des Umsetzers 37 oder durch Messung der Ionenlaufzeit zwischen Gitter 13 und Kollektor 16 gewonnen.

Es wurde bereits erwähnt, daß die Unterscheidung der Spurengase von den Luftmolekülen auf Grund der wesentlich höheren Masse von ionisierten Molekülkomplexen erfolgt. Das zwischen Quellen- und Kollektorelektrode angelegte elektrische Feld bestimmt die zu messende Ionenpolarität. Führt man der Meßzelle reine Luft zu, so kann man mit den hierbei gewonnenen Meßwerten die an die Meßzelle angeschlossene Auswerteschaltung eichen bzw. überprüfen. Eine Abhängigkeit des Kollektorstroms von der Luftfeuchtigkeit, die bei Anwesenheit von Spurengasen durch Konkurrenzprozesse mit negativem Einfluß auf die Komplexbildung entsteht, läßt sich entweder durch Verwendung eines Luftfeuchtigkeitsfühlers berücksichtigen, dessen Ausgangssignal zum Mikrocomputer 35 gelangt und dort einen Korrekturwert entsprechend der absoluten Luftfeuchtigkeit erzeugt, oder man hält die Luftfeuchtigkeit durch geeignete Meßnahmen am Eingang der Meßzelle konstant, beispielsweise durch eine Entfeuchtungs- und/oder Heizvorrichtung. Auf ähnliche Weise läßt sich der Einfluß von Temperaturänderungen auf das Meßergebnis, entstehend durch die mit der Temperatur ansteigende Ionenbeweglichkeit, berücksichtigen, wenn man das Ausgangssignal des Temperaturfühlers 25 dem Mikrocomputer 35 zuführt und diesen hieraus einen entsprechenden Korrekturwert für das Kollektorstromsignal, d. h. die Steigung der gespeicherten Referenzkurve, erzeugen läßt.

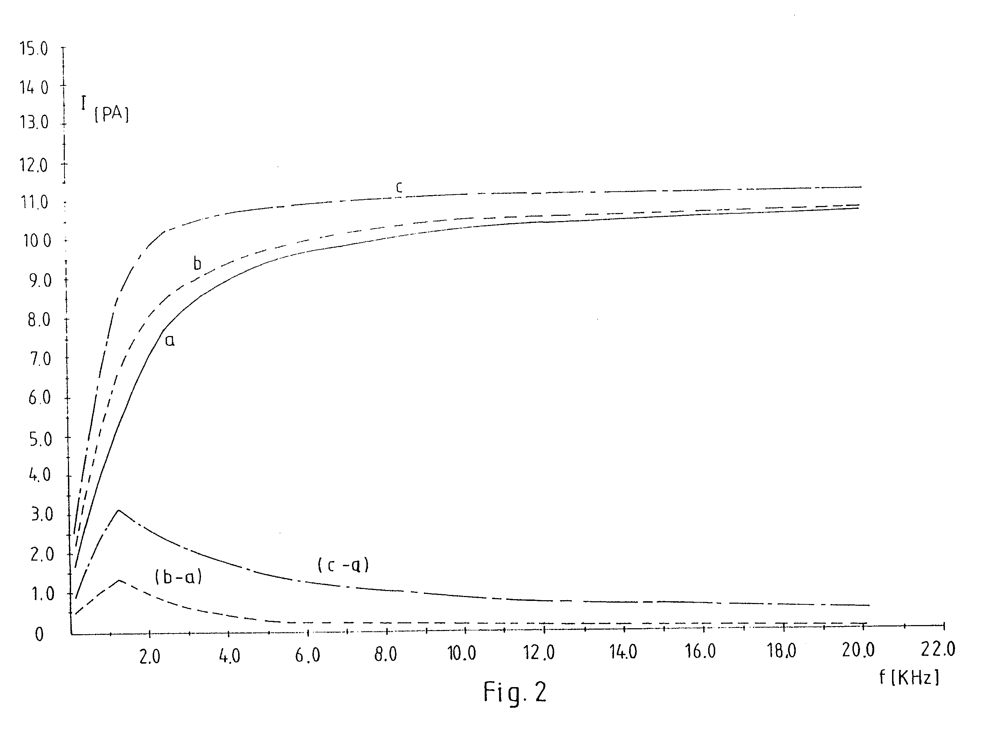

Mit dem geschilderten Verfahren und der erläuterten Vorrichtung lassen sich nicht nur bestimmte Arten von Spurengas erkennen, sondern man kann auch deren Konzentration feststellen. Dies wird nachfolgend anhand von Fig. 2 erläutert. Aus Fig. 1 war ersichtlich, daß sich in Abhängigkeit von der Ionenmobilität die Steilheit der Strom/Frequenzkurve im linearen Anstiegsbereich ändert. Man kann also durch Messung des Kollektorstroms bei zwei vorgegebenen Stützfrequenzen die Steigung der Kurve ermitteln. Fig. 2 zeigt mit Kurve a die Strom/Frequenzkurve für gefilterte Luft bei 11 % relativer Feuchte. Die Kurve b gibt den Verlauf bei Zusatz von 0,050 $\mu$g/1 Sarin und Kurve c bei Zusatz von 0,106 $\mu$g/1 wieder. Verwendet man Stützfrequenzen von 312,5 Hz und 1.250 Hz, so ergibt sich für gefilterte Luft eine Steilheit von 3,28 pA/kHz; für die Kurve b eine Steilheit von 4,07 pA/kHz und für die Kurve c eine Steilheit von 5,18 pA/kHz. Durch Ermittlung der Kurvensteigung im linearen Bereich zwischen zwei vorgegebenen Stützfrequenzen läßt sich also auch die Konzentration des Spurengases ermitteln. Dies kann im Mikrocomputer 35 erfolgen. Statt dessen kann man,wie ebenfalls in Fig. 2 dargestellt, die Differenz des Stromwertes zwischen gefilterter Luft und mit einem Spurengas unterschiedlicher Konzentration versetzter Luft ermitteln, also die Werte c-a und b-a und einen Alarm auslösen, falls bei einer vorgegebenen Frequenz dieser Differenzwert einen Schwellwert überschreitet. Im gezeigten Beispiel liegt die Differenzkurve (b-a) bei einer Frequenz von f = 0,7 kHz unter dem Wert von 1,0 pA, demgegenüber die Kurve (c-a) bei der gleichen Frequenz über 2,0 pA. Durch Abspeichern entsprechender Eichkurven kann nicht nur das Überschreiten eines vorgegebenen Schwellwerts, sondern der Wert der Konzentration selbst bestimmt werden.

## Ansprüche

1. Verfahren zum Feststellen geringfügiger Mengen von Gasen oder Dämpfen in Luft oder anderen Gasgemischen, bei dem das Gasgemisch

   a) eine zwischen Einlaß (5) und Auslaß (22) eine Driftzone aufweisende Kammer kontinuierlich durchströmt;

   b) am Einlaß der Driftzone durch eine Strahlungsquelle (10) ionisiert wird;

   c) in der Driftzone dem elektrischen Wechselfeld eines aus parallelen Drähten bestehenden Gitters (13) ausgesetzt ist, wobei benachbarte Gitterdrähte jeweils auf unterschiedlichem elektrischen Potential liegen und an die beiden Gruppen von Gitterdrähten eine Wechselspannung einstellbarer Frequenz gelegt wird; und

   d) der an einer am Ende der Driftzone vorgesehenen Korrektorelektrode (16) entstehende Kollektorstrom gemessen wird, **dadurch gekennzeichnet,** daß

   e) die Frequenz der den Gitterdrahtgruppen zugeführten Wechselspannung periodisch entweder kontinuierlich oder in Schritten verändert und dabei der Kollektorstrom I in Abhängigkeit von der Gitterspannungsfrequenz f gemessen, digitalisiert und als Funktion der Frequenz in einem Speicher (38) abgelegt wird;

   f) in einem weiteren Speicher (39) eine Tabelle der Frequenzabhängigkeit des Kollektorstroms für verschiedene Gase oder Dämpfe gespeichert ist;

   g) ein digitaler Vergleicher (39), vorzugsweise ein Mikrocomputer (35), die gemessenen Strom/Frequenzkurven mit den in der Tabelle abgespeicherten Strom/Frequenzkurven vergleicht und bei Übereinstimmung der Meßkurve mit einer Kurve der Tabelle ein für das entsprechende Gas bzw. den Dampf charakteristisches Anzeigesignal liefert.

2. Verfahren nach Anspruch 1, **dadurch gekennzeichnet,** daß die Driftgeschwindigkeit der Ionen durch die Meßzelle durch Drehzahlregelung (44) eines als Gasstromerzeugungsvorrichtung dienenden Ventilators (3) konstant gehalten wird.

3. Verfahren nach Anspruch 2, **dadurch gekennzeichnet,** daß der bei einem weit oberhalb des Betriebsbereichs der Gitterwechselspannung f gemessene, nur von der Strömungsgeschwindigkeit abhängige Kollektorstrom $I_0$ gemessen und mit einem abgespeicherten Sollwert verglichen und aus diesem Vergleich ein Stellsignal (45) für die Drehzahlregelung (44) des Ventilators (3) abgeleitet wird.

4. Verfahren nach Anspruch 2, **dadurch gekennzeichnet,** daß im Zuge eines Meßzyklus am Gitter (13) eine sprunghafte Frequenzänderung vorgenommen, die um die Ionenlaufzeit zwischen Gitter und Kollektorelektrode (16) verzögerte sprunghafte Kollektorstromänderung erfaßt und aus der Ionenlaufzeit und dem bekannten Abstand zwischen Gitter und Kollektorelektrode die Strömungsgeschwindigkeit des Gasstroms ermittelt wird.

5. Verfahren nach einem der Ansprüche 1 bis 4, **dadurch gekennzeichnet,** daß die beiden Gitterdrahtgruppen mit gleichfrequenten, aber um 180° phasenversetzten Rechteckspannungen beaufschlagt werden und der Potentialmittelwert beider Gitterdrahtgruppen dem am Ort des Gitters (13) herrschenden Potential des von der Kollektorelektrode (16) erzeugten elektrischen Feldes entspricht.

6. Verfahren nach einem der Ansprüche 1 bis 5, **dadurch gekennzeichnet,** daß zur Ermittlung der Konzentration eines festgestellten Gases der bei einer höheren Frequenz der Gitterwechselspannung gemessene Wert des Kollektorstroms von dem bei einer niedrigen Frequenz gemessenen Wert des Kollektorstroms subtrahiert und die hieraus gewonnene Steilheit der Kollektorstrom/Frequenzkurve mit dem in einer dem betreffenden Gas zugeordneten Tabelle in Abhängigkeit von der Kurvensteilheit abgespeicherten Konzentrationswert verglichen wird.

7. Verfahren nach einem der Ansprüche 1 bis 5, **dadurch gekennzeichnet,** daß zur Ermittlung der Konzentration eines festgestellten Gases der Kollektorstromwert a eines spurengasfreien Trägergases, z.B. Luft, vom Kollektorstromwert b bei spurengasbehaftetem Trägergas subtrahiert und der Differenzwert b-a mit einem der gleichen Frequenz f zugeordneten Schwellwert verglichen wird.

8. Vorrichtung zum Feststellen geringfügiger Mengen von Gasen oder Dämpfen in Luft oder anderen Gasgemischen nach dem Verfahren nach Anspruch 1 oder einem der Folgeansprüche mit

a) einer Kammer zum Durchleiten des Gasstroms;

b) einer zwischen Kammereinlaß (5) und Kammerauslaß (22) angeordneten Driftzone;

c) einer am Einlaß der Driftzone vorgesehenen ionisierenden Strahlungsquelle (10);

d) einer Kollektorelektrode (16) am Ende der Driftzone;

e) einer Vorrichtung (3) zum Erzeugen eines kontinuierlichen Gasstroms durch die Driftzone zur Kollektorelektrode (16);

f) einem in der Driftzone angeordneten, aus parallelen Drähten bestehenden Gitter (13), wobei benachbarte Gitterdrähte jeweils auf unterschiedlichem elektrischen Potential liegen und an die beiden Gruppen von Gitterdrähten eine Wechselspannung einstellbarer Frequenz gelegt wird; sowie

g) einer den Kollektorstrom messenden Vorrichtung (35, 36, 37); **dadurch gekennzeichnet, daß**

h) die Anschlußklemmen (18, 19) der beiden Gitterdrahtpaare an die Ausgänge eines Rechteckgenerators (32) mit digital steuerbarer Frequenz angeschlossen sind;

i) die Kollektorelektrode (16) über einen A/D-Umsetzer (37) mit einem ersten Speicher (38) in Verbindung steht;

j) in einem weiteren Speicher (39) eine Tabelle der Frequenzabhängigkeit des Kollektorstroms für verschiedene Gase oder Dämpfe gespeichert ist;

k) als digitaler Vergleicher (39) ein Mikrocomputer (35) eingangsseitig an die beiden Speicher (38, 39) anschließbar ist und die im ersten Speicher (38) befindlichen Meßkurven mit den im zweiten Speicher (39) abgelegten Bezugskurven vergleicht und zugleich ein die Frequenz des Rechteckgenerators (32) steuerndes Signal liefert;

l) an einen Ausgang des Mikrocomputers eine Anzeige- oder Alarmvorrichtung (41 - 43) angeschlossen ist, welche bei Übereinstimmung der Meßkurve mit einer Kurve der Tabelle ein für das entsprechende Gas bzw. den Dampf charakteristisches Anzeigesignal liefert.

9. Vorrichtung nach Anspruch 8, **dadurch gekennzeichnet,** daß im Gasstrom vorzugsweise am Ausgang der Driftzone ein Temperaturfühler (25) angeordnet und sein Ausgang an dem Mikrocomputer (35) angeschlossen ist.

10. Vorrichtung nach Anspruch 8 oder 9, **dadurch gekennzeichnet,** daß am Eingang (5) der Meßzelle ein mechanisches Filter (6) und ein die Strömung vergleichmäßigender, vorzugsweise aus zwei im Abstand angeordneten Sieben (7a,7b) bestehender Strömungsteiler (7) vorgesehen sind und/oder zwischen Driftzone und Gasstromerzeuger (3) ein siebartiger Strömungsteiler (21) angeordnet ist.

## Claims

1. A method for detecting very small concentrations of gases or vapors in air or other gas mixtures, vhereat the gas mixture

   a) continuously flows through a chamber having a drift zone provided between its inlet (5) and its outlet (22);

   b) is ionized at the inlet of the drift zone by means of a radiation source (10);

   c) in the drift zone is exposed to the electrical alternating field of a grid (13) consisting of parallel wires, whereat adjacent grid wires are fed with different electrical potential and whereat an AC voltage of adjustable frequency is fed to the two groups of grid wires;

   d) the collector current is measured which is generated at a collector electrode (16) provided at the end of the drift zone;

   **characterized in that**

   e) the frequency of the AC voltage fed to the groups of grid wires is periodically changed either continuously or stepwise and simultaneously the collector current I is measured in its dependency on the grid frequency f, the current is digitized and is stored in a memory (38) as a function of the frequency;

   f) in a further memory (39) a table is stored describing the frequency dependency of the collector current for different gases or vapors;

   g) a digital comparator (39), preferably a microcomputer (35), compares the measured current frequency curves with the curves stored in said table and if a measured curve is identical with one of the stored curves, the comparator delivers an indication signal characterizing the gas or vapor corresponding to the particular stored curve.

2. The method according to claim 1, **characterized in that** the flow rate of the ions through the measuring cell is maintained constant by speed control (44) of a ventilator (3) used as gas flow generator.

3. The method according to claim 2, **characterized in that** the collector current ($I_0$) measured at a frequency far higher than the normal operating range of grid frequencies f, and therefor depending only on the flow rate, is measured and compared with a stored setpoint and a correction signal (45) for controlling the speed (44) of the ventilator (3) is derived from said comparison.

4. The method according to claim 2, **characterized in that** during a measuring cycle a stepwise frequency change is initiated at the grid (13), the corresponding stepwise change of the collector current as delayed by the travelling time of the ions between the grid and the collector electrode (16) is determined, and from this travelling time of the ions and the known physical distance between the grid and the collector electrode the flow rate of the gas stream is calculated.

5. The method according to one of the claims 1 to 4, **characterized in that** both groups of grid wires are supplied with square wave signals having the same frequency but being offset with respect to their phase by 180° and that the average voltage of both groups of grid wires corresponds to the electrical potential at the location of the grid (13) within the electrical field generated by the collector electrode (16).

6. The method according to one of the claims 1 to 5, **characterized in that** for determining the concentration of a detected gas the value of the collector current measured at a higher frequency of the grid AC voltage is subtracted from the collector current value measured at a lower frequency, and that the steepness of the collector current/frequency curve derived from this subtraction is compared with a concentration value stored in a table associated with the concerned gas in its dependency on the steepness of the curve.

7. The method according to one of the claims 1 to 5, **characterized in that** for determining the concentration of a detected gas the collector current value "a" of a clean carrier gas, such as air, is subtracted from the collector current value "b" of a gas mixture comprising trace gases and that the differential value "b - a" is compared with a limit value associated with the same frequency f.

8. An apparatus for detecting very small concentrations of gases or vapors in air or other gas mixtures in accordance with the method of claim 1 or one of the subsequent claims comprising:

a) a chamber through which the gas stream flows:

b) a drift zone provided between the inlet (5) and the outlet (22) of said chamber;

c) an ionizing radiation source (10) located at the inlet of the drift zone;

d) a collector electrode (16) at the end of said drift zone;

e) means (3) for generating a continuous gas flow through said drift zone to said collector electrode (16);

f) a grid (13) provided in said drift zone and consisting of parallel wires, whereat adjacent grid wires are supplied with different electrical potentials and an AC voltage is fed to the two groups of grid wires of adjustable frequency; and

g) an apparatus (35, 36, 37) for measuring the collector current;

**characterized in that**

h) the terminals (18, 19) of the two groups of grid wires are connected to the outputs of a square wave generator (32) whose frequency can be controlled digitally;

i) the collector electrode (16) is connected to a first memory (38) via an A/D converter (37);

j) a table describing the frequency dependency of the collector current for various gases or vapors is stored in a further memory (39);

k) as a digital comparator (39) a microcomputer (35) is with its inlets connectable to the two memories (38, 39) and compares the measuring curves stored in the first memory (38) with the reference curves stored in the second memory (39) and simultaneously delivers a signal controlling the frequency of the square wave generator (32);

l) an indicator or alarm device (41 to 43) is connected to an output of the microcomputer and delivers an indication signal characterizing a particular gas or vapor if the measured curve corresponds to a curve in said table as associated with said particular gas or vapor.

9. The apparatus according to claim 8, **characterized in that** a temperature sensor (25) is provided in the gas stream preferably at the outlet of the drift zone, and its output is connected to the microcomputer (35).

10. The apparatus according to claim 8 or 9, **characterized in that** a mechanical filter (6) is provided at the inlet (5) of the measuring cell and a flow smoothing flow divider (7) is provided, which preferably consists of two spaced apart meshes (7a, 7b) and/or a mesh-like flow divider (21) is provided between the drift zone and the gas flow generator (3).

**Revendications**

1. Procédé pour la détermination de petites quantités de gaz ou de vapeur dans l'air ou dans d'autres mélanges gazeux dans lequel le mélange gazeux

a) parcourt de façon continue une chambre présentant une zone de dérivation entre une entrée (5) et une sortie (22);

b) est ionisé par une source de rayonnement (10) à l'entrée de la zone de dérivation;

c) est soumis dans la zone de dérivation au champ électrique alternatif d'une grille (13) constituée de fils parallèles, des fils de grille voisins étant respectivement à un potentiel électrique différent et une tension alternative de fréquence réglable pouvant être appliquée aux deux groupes de fils de grille; et

d) le courant de collecteur engendré à une électrode collectrice (16) prévue à l'extrémité de la zone de dérivation est mesurée,

**caractérisé en ce que**

e) la fréquence de la tension alternative appliquée aux groupes de fils de grille est modifiée périodiquement soit de façon continue soit par étape et que de cette manière le courant collecteur I est mesuré en fonction de la fréquence de tension de grille f, numérisée et mémorisée en tant que fonction de la fréquence dans une mémoire (38);

f) un tableau de la relation entre la fréquence du courant collecteur pour différents gaz ou vapeurs est mémorisé dans une autre mémoire (39);

g) un comparateur numérique (39), de préférence un microcalculateur (35), compare les courbes courant/fréquence mesurée aux courbes courant/fréquence mémorisées dans le tableau et, lorsque la courbe mesurée coïncide avec une courbe du tableau, envoie un signal d'indication caractéristique du gaz ou de la vapeur correspondant.

2. Procédé selon la revendication 1, caractérisé en ce que la vitesse de dérivation des ions à travers la cellule de mesure est maintenue constante par réglage de la vitesse de rotation (44) d'un ventilateur servant de dispositif de génération de courant gazeux.

3. Procédé selon la revendication 2, caractérisé en ce que le courant collecteur $I_0$, mesuré pour une tension alternative de grille largement au-dessus de la zone de fonctionnement, dépendant uniquement de la vitesse d'écoulement, est mesuré et comparé avec une valeur de consigne mémorisée, et en ce qu'un signal de réglage (45) du réglage de la vitesse de rotation (44) du ventilateur (3) est dérivé de cette comparaison.

4. Procédé selon la revendication 2, caractérisé en ce que, au cours d'un cycle de mesure à la grille (13), une variation de fréquence par saut est réalisée qui détecte la variation de courant collecteur discontinu retardé du temps de parcours des ions entre la grille et l'électrode collectrice (16), et en ce que la vitesse d'écoulement du courant gazeux est déterminée à partir du temps de parcours desions et de la distance connue entre la grille et l'électrode collectrice.

5. Procédé selon l'une des revendications 1 à 4, caractérisé en ce que les deux groupes de fils de grille sont alimentés par des tensions rectangulaires, de même fréquence, mais déphasées de 180°, et que la valeur moyenne de potentiel des deux groupes de fils de grille correspond au potentiel, régnant à l'emplacement de la grille (13), du champ électrique créé par l'électrode collectrice (16).

6. Procédé selon l'une des revendications 1 à 5, caractérisé en ce que pour déterminer la concentration d'un gaz donné, la valeur du courant collecteur mesurée à une fréquence plus élevée de la tension alternative de grille est soustraite de la valeur du courant collecteur mesurée à une fréquence basse et que la pente qui est obtenue pour la courbe courant collecteur/fréquence est comparée avec la valeur de concentration mémorisée dans un tableau associé au gaz considéré en fonction de la pente de courbe.

7. Procédé selon l'une des revendications 1 à 5, caractérisé en ce que pour déterminer la concentration d'un gaz donné, la valeur de courant collecteur a d'un gaz porteur exempt de traces de gaz, par exemple de l'air, est soustraite de la valeur b de courant collecteur d'un gaz porteur comportant des traces de gaz, et en ce que la valeur de différence b - a est comparée à une valeur de seuil associée à la même fréquence f.

8. Dispositif pour la détermination de petites quantités de gaz ou de vapeurs dans l'air ou dans d'autres mélanges gazeux selon le procédé de la revendication 1 ou l'une des revendications suivantes comportant

a) une chambre à traverser par le flux gazeux;

b) une zone de dérivation disposée entre l'entrée de chambre (5) et la sortie de chambre (22);

c) une source de rayonnement ionisante (10) prévue à l'entrée de la zone de dérivation;

d) une électrode collectrice (16) à l'extrémité de la zone de dérivation,

e) un dispositif (3) destiné à engendrer un écoulement continu de gaz à travers la zone de dérivation vers l'électrode collectrice (16);

f) une grille (13) disposée dans la zone de dérivation, constituée de fils parallèles, des fils de grille voisins étant respectivement à un potentiel électrique différent et une tension alternative de fréquence réglable étant appliquée aux deux groupes de fils de grille; ainsi

g) qu'un dispositif de mesure du courant de collecteur (35, 36, 37);

**caractérisé en ce que**

les bornes de raccordement (18, 19) des deux paires de fils de grille sont raccordées aux sorties d'un générateur d'ondes rectangulaires (32) à fréquence numérique réglable;

i) l'électrode collectrice (16) est en liaison avec une première mémoire (38) à l'aide d'un convertisseur analogique/numérique (37);

j) un tableau de la relation entre la fréquence et le courant de collecteur pour divers gaz ou vapeurs est mémorisé dans une autre mémoire (39);

k) un microcalculateur (35) agissant comme comparateur numérique (39) peut être raccordé sur le côté entrée aux deux mémoires (38, 39) et compare les courbes de mesure se trouvant dans une première mémoire (38) avec les courbes de référence mémorisées dans la deuxième mémoire (39) et envoie en même temps un signal commandant la fréquence du générateur d'ondes rectangulaires (32);

l) un affichage ou un dispositif d'alarme (41, 43) est raccordé à une sortie du microcalculateur et donne un signal d'indication caractéristique du gaz ou de la vapeur correspondante lors d'une coïncidence de la courbe de mesure avec une courbe du tableau.

9. Dispositif selon la revendication 8, **caractérisé en ce que**, un détecteur de température est disposé dans l'écoulement gazeux, de préférence à la sortie de la zone de dérivation et sa sortie est raccordée au microcalculateur (35).

**10.** Dispositif selon la revendication 8 ou 9 caractérisé en ce que, à l'entrée (5) de la cellule de mesure est prévu un filtre mécanique (6) et un diviseur de courant composé de préférence de deux tamis disposés à distance (7a, 7b), uniformisant l'écoulement, et/ou un diviseur de courant (21) en forme de tamis est disposé entre la zone de dérivation et le générateur de courant gazeux.

Fig. 1

Fig. 2

EP 0 233 579 B1

Fig. 3

Fig.4